# FASCICULE DE BREVET EUROPEEN

(11) **EP 3 077 233 B1**
(45) Date de publication et mention de la délivrance du brevet: **27.03.2019**
(21) Numéro de dépôt: 14806614.5
(22) Date de dépôt: 02.12.2014
(51) Int. Cl.: B60H 1/00

(54) **BOITIER D'ENTREE D'AIR POUR UN SYSTEME DE CHAUFFAGE, VENTILATION ET/OU CLIMATISATION MAINTENANT UN FLUX D'AIR RECYCLE AVEC L'ARRIVEE D'AIR FRAIS**
LUFTEINLASSGEHÄUSE FÜR EINE HEIZUNGS-, BELÜFTUNGS- UND/ODER KLIMAANLAGE ZUR AUFRECHTERHALTUNG EINER STRÖMUNG VON AUFBEREITETER LUFT MIT ANSAUGUNG VON FRISCHLUFT
AIR INLET CASING FOR A HEATING, VENTILATION AND/OR AIR-CONDITIONING SYSTEM MAINTAINING A FLOW OF RECYCLED AIR WITH THE INTAKE OF FRESH AIR

(30) Priorité: 04.12.2013 FR 1362059
(43) Date de publication de la demande: 12.10.2016
(73) Titulaire: Valeo Systemes Thermiques, 78320 Le Mesnil Saint Denis (FR)
(72) Inventeur: QUEINNEC, Jean-Yves, F-78990 Elancourt (FR)
(74) Mandataire: Metz, Gaëlle
(86) Numéro de dépôt international: PCT/EP2014/076274
(87) Numéro de publication internationale: WO 2015/082480

(56) Documents cités:
- DE-A1- 19 954 308
- US-A1- 2010 009 620
- US-A1- 2012 214 394
- US-B1- 6 311 763

## Description

La présente invention concerne les boîtiers d'entrée d'air alimentant en sortie un système de chauffage ventilation et/ou climatisation, comportant des moyens pour contrôler la répartition entre deux flux d'air de provenance différente.

Les systèmes de chauffage ventilation et/ou climatisation comportent des entrées d'air afin d'introduire soit de l'air en provenance de l'extérieur de l'habitacle, ou air frais, soit issu de l'intérieur de l'habitacle, ou air recyclé.

Les boîtiers d'entrée d'air disposent à cette fin de volets permettant de sélectionner le flux introduit dans le système de chauffage ventilation et/ou climatisation. Ils comprennent également des moyens de filtration assurant un traitement qualitatif de l'air introduit dans l'habitacle par le système.

Le système de chauffage ventilation et/ou climatisation peut utiliser pour entraîner l'air des groupes moto-ventilateurs ou pulseurs, à double aspiration, ou bien des groupes moto-ventilateurs doubles. Dans ce cas, le dispositif d'entrée d'air est conformé pour avoir deux sorties, alimentant chacune un pulseur, après l'admission et la filtration des flux d'air en entrée.

De plus, le système de chauffage ventilation et/ou climatisation peut avoir différents modes de fonctionnement, qui sont, de manière non limitative, le dégivrage des vitres, un chauffage rapide ou le maintien d'une température. Suivant ces modes de fonctionnement, il peut être demandé d'envoyer tel ou tel flux vers l'un ou l'autre des pulseurs, ou les deux. Pour le boîtier d'entrée d'air, cela implique d'être conçu avec un ensemble relativement complexe d'entrées des flux d'air frais et d'air recyclé, et de volets de sélection vers les deux sorties qui sont en correspondance avec les pulseurs.

Par ailleurs, ces installations, notamment dans le cas des applications automobiles, doivent avoir un encombrement réduit et minimiser le nombre de composants, notamment les volets de sélection.

Pour répondre aux objectifs de fonctionnement et d'intégration avec des pulseurs coaxiaux alimentés selon deux sens opposés, il a été envisagé un boîtier d'entrée d'air avec en face d'une première ouverture supérieure d'aspiration une entrée d'air frais, une entrée d'air recyclé et un volet de sélection entre les deux flux d'air, et, à proximité d'une deuxième ouverture inférieure d'aspiration, une entrée d'air recyclée occultable. Le boîtier est par ailleurs commandé par un système qui positionne les volets contrôlant les deux entrées en fonction du mode de fonctionnement souhaité.

Cette configuration permet d'optimiser certains types de fonctionnement du système de chauffage ventilation et/ou climatisation. Par exemple, le boîtier peut être configuré pour alimenter directement les deux bouches en air recyclé lorsque le système n'utilise que de l'air recyclé, ou alimenter directement la bouche du haut en air frais et la bouche du bas en air recyclé lors d'un fonctionnement mixte.

Par contre, lors d'un fonctionnement en air frais, lorsque l'entrée inférieure d'air recyclé est fermée, l'air doit effectuer un parcours complexe dans le boîtier pour aller de l'entrée supérieure d'air vers la sortie inférieure. En particulier, cela est gênant lorsque le volet supérieur est positionné pour laisser passer un pourcentage d'air recyclé.

En effet, la contre pression dans le circuit d'air recyclé du système de chauffage ventilation et/ou climatisation est relativement faible. A contrario, à cause des considérations d'intégration et d'encombrement, le circuit de passage de l'air entre l'entrée d'air supérieure et la sortie inférieure est complexe et peut provoquer des pertes de charge relativement importantes. On risque donc de perdre un des avantages liés à l'utilisation de l'air recyclé dans ce mode de fonctionnement.

L'objet de la présente invention est d'envoyer de l'air recyclé vers le dispositif d'entraînement d'air inférieur dans un mode de fonctionnement où le boîtier est alimenté par le haut en minimisant les pertes de charge du circuit de l'air recyclé.

Le document US 2010/0009620 A1 divulgue un boîtier d'entrée d'air destiné à alimenter en air frais et en air recyclé un système de chauffage, ventilation et/ou climatisation, comprenant un circuit destiné à alimenter en air frais et/ou recyclé au moins un dispositif d'entrainement d'air, ledit boîtier comportant en outre un moyen destiné à fournir un flux d'air recyclé dans ledit circuit, ledit moyen étant apte à s'ouvrir par différence de pression, ledit circuit étant configuré de telle sorte qu'il s'y crée une perte de charge générant au moins temporairement ladite différence de pression.

Ledit moyen destiné à fournir un flux d'air recyclé amène de la sorte l'air recyclé plus directement, limitant ainsi les pertes de charge dans le circuit d'air recyclé. On bénéficie donc, pour la partie du flux d'air recyclé passant par ce moyen complémentaire, de l'avantage apporté par la faible contre-pression du circuit de l'air recyclé, venant de l'habitacle et ceci, sans avoir à faire appel à des moyens d'ouverture/fermeture commandables.

Par ailleurs, le document US 2012/214394 A1 divulgue une installation avec deux dispositifs d'entraînement d'air, pour permettre une gestion des flux d'air limitant l'apparition de buée sur le pare-brise, le volet agencée pour le deuxième circuit d'air recyclé étant actionné par une unité de contrôle électronique.

### Présentation de l'invention

Suivant l'invention, ledit circuit comprend une partie commune débouchant dans au moins une première partie destinée à alimenter un premier dispositif d'entrainement d'air avec une première perte de charge et au moins une deuxième partie destinée à alimenter un deuxième dispositif d'entraînement d'air avec une deuxième perte de charge supérieure à ladite première perte de charge, ledit moyen destiné à fournir un flux d'air recyclé, étant situé dans ladite deuxième partie.

Autrement dit, le boîtier d'entrée d'air alimente un système de climatisation avec deux dispositifs d'entraînement d'air, chacun alimentant éventuellement une partie différente du système. Par ailleurs, l'alimentation en air recyclé par une entrée commune aux deux dispositifs d'entraînement d'air se fait avec une perte de charge plus importante pour le deuxième. L'installation du moyen s'ouvrant par différence de pression fournissant un flux d'air recyclé à ce deuxième dispositif en priorité optimise l'effet de ce moyen.

Avantageusement, si un élément créant une perte de charge importante est interposé dans ledit circuit, ledit moyen destiné à fournir un flux d'air recyclé, apte à s'ouvrir par différence de pression, est situé du côté du circuit destiné à alimenter ledit dispositif d'entraînement par rapport à l'élément de perte de charge. Le boîtier peut comprendre un moyen de filtration dans ladite partie commune du circuit. Ce moyen de filtration, qui est généralement source de perte de charge, est normalement utilisé dans le circuit que doit emprunter l'air frais, venant de l'extérieur. Par contre, cette filtration n'est pas nécessairement utile pour l'air recyclé, qui provient a priori d'un air extérieur déjà filtré. La mise en oeuvre de l'invention tire parti du fait que ce moyen de filtration est généralement mis près de l'arrivée d'air frais, ce qui laisse donc un large espace dans le circuit à l'intérieur du boîtier pour placer l'entrée d'air recyclé en évitant cette perte de charge pour alimenter le dispositif d'entraînement d'air. De préférence, ledit circuit comprend au moins une arrivée destinée à l'air frais et/ou recyclé débouchant dans ladite partie commune, ladite partie commune mettant en communication au moins une sortie destinée à alimenter un premier dispositif d'entraînement d'air depuis ladite arrivée d'air, et au moins un canal mettant en communication ladite partie commune avec une deuxième sortie destinée à alimenter ledit deuxième dispositif d'entraînement, ledit moyen destiné à fournir un flux d'air recyclé débouchant dans ledit canal. Il est à noter que la configuration d'embouchure dudit canal dans la partie commune est souvent une cause de perte de charge supplémentaire.

Dans un mode de réalisation particulier, ledit circuit du boîtier d'entrée d'air comprend une première dite sortie destinée à alimenter un dit premier dispositif d'entraînement d'air, une deuxième dite sortie destinée à alimenter un deuxième dit dispositif d'entraînement d'air, et un canal situé en aval dudit élément créant une perte de charge, ledit canal alimentant ladite deuxième sortie depuis ladite arrivée d'air frais et/ou recyclé et dans lequel débouche le moyen destiné à fournir un flux d'air recyclé.

Cette configuration correspond à un boîtier double nappe. Il est avantageux, dans ce cas, de placer l'arrivée d'air recyclé complémentaire dans ledit canal, au plus près du deuxième dispositif d'entraînement pour lequel le circuit d'alimentation est le plus long. En effet, c'est le dispositif d'entraînement d'air pour lequel les pertes de charge dans le circuit d'alimentation en air frais sont les plus importantes.

Selon un mode de réalisation particulier, le boîtier d'entrée d'air comprend en outre une arrivée d'air recyclé équipée d'un moyen de fermeture commandable, ladite arrivée d'air recyclé débouchant dans ledit canal. Ce moyen de fermeture est avantageusement un volet, dit volet principal.

Selon différents modes de réalisation de l'invention qui pourront être pris ensemble ou séparément :
- le moyen destiné à fournir un flux d'air recyclé par différence de pression comprend une ouverture pratiquée dans le volet principal ;
- le moyen destiné à fournir un flux d'air recyclé par différence de pression comprend un volet additionnel placé sur le volet principal à l'intérieur du boîtier avec un moyen de rappel ;
- l'ouverture du volet additionnel est limitée en amplitude par un moyen de butée ;
- la section de l'ouverture pratiquée dans le volet principal est partiellement bouchée par une grille ;
- le moyen de rappel du volet additionnel est la gravitation ;
- le moyen de rappel du volet additionnel est un moyen élastique ;
- le volet principal de fermeture a une position fermant l'alimentation de ladite deuxième sortie par ledit canal.

L'invention concerne aussi un boîtier de climatisation comportant ledit boîtier d'entrée d'air.

### Description détaillée de l'invention :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente une vue en perspective d'un boîtier d'entrée d'air pour alimenter un système de chauffage ventilation et/ou climatisation à double nappe.
La figure 2 présente le même boîtier que celui de la figure 1 selon une perspective différente.
La figure 3 présente une vue en perspective d'un boîtier d'entrée d'air selon l'invention.
La figure 4 montre les flux d'air dans un premier mode de fonctionnement du boîtier d'entrée d'air selon l'invention.
La figure 5 montre les flux d'air dans un deuxième mode de fonctionnement du boîtier d'entrée d'air selon l'invention.

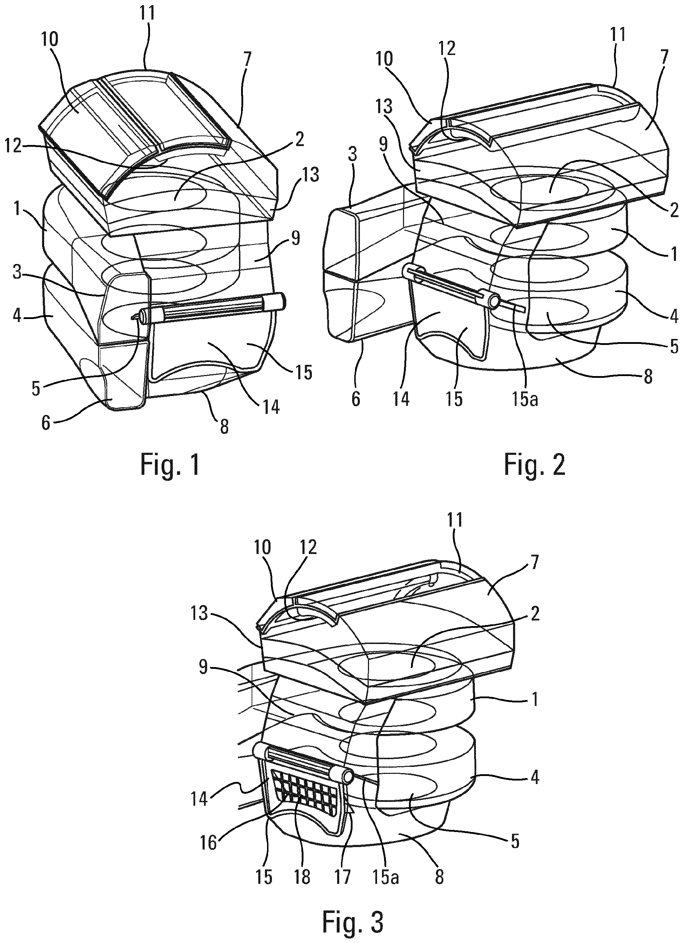

En référence aux figures 1 et 2, l'invention concerne un boîtier d'entrée d'air intégré dans un boîtier de climatisation. Ledit boîtier comprend ici deux dispositifs d'entraînement d'air, munis d'un groupe moto-propulseur à deux roues d'entraînement d'air. Le groupe moto-propulseur et les roues d'entraînement d'air ne sont pas représentés sur la figure. Par contre, on y voit une première volute 1 supérieure entourant une des roues d'entrainement. L'air y est aspiré par une ouverture circulaire centrale supérieure 2 puis est envoyé par le conduit périphérique 3 vers un premier circuit du système de chauffage ventilation et/ou climatisation. De manière similaire, une deuxième volute 4 inférieure entoure la deuxième roue d'entrainement. L'air y est aspiré par une ouverture circulaire centrale 5 inférieure puis est envoyé par le conduit périphérique 6 vers un deuxième circuit du système de chauffage ventilation et/ou climatisation. Les ouvertures supérieure 2 et inférieure 5 sont ici coaxiales.

Le boîtier d'entrée d'air est composé :
- D'un volume supérieur 7 placé face à l'ouverture 2 d'alimentation de la première volute 1 ;
- D'un volume inférieur 8 placé face à l'ouverture 5 d'alimentation de la deuxième volute 4 ; et
- D'un volume intermédiaire 9 contournant les deux volutes 1 et 4, et assurant la communication entre les deux volumes, supérieur et inférieur.

En outre, le boîtier comprend sur le volume supérieur, une ouverture 10 destinée à l'arrivée d'air frais, venant de l'extérieur du véhicule, et une ouverture 11 destinée à l'arrivée d'air recyclé, venant de l'habitacle. Sur l'exemple présenté, un volet 12, dit de mixage, glissant entre les deux ouvertures est apte à fermer complètement l'une ou l'autre. Il peut également, dans des positions intermédiaires, laisser des sections de passage sur chacune des deux ouvertures, permettant de faire varier le pourcentage d'air recyclé par rapport à l'air frais. Ce volume supérieur est de plus entièrement traversé horizontalement par un moyen de filtration 13. Ce moyen de filtration s'interpose entre les arrivées d'air frais 10 et d'air recyclé 11, situées en haut du volume supérieur 7, d'une part, et l'ouverture centrale 2 de la volute supérieure 1, débouchant sur le fond de ce volume, d'autre part. Il s'interpose également entre ces mêmes arrivées d'air et le volume 9 de communication avec la partie inférieure du boîtier. Ce moyen, conçu principalement pour filtrer l'air frais avant de l'introduire dans l'habitacle, crée une première perte de charge entre l'arrivée d'air frais 10 et les deux sorties, 2 et 4, vers les dispositifs d'entraînement d'air.

Il est à noter également que le volume 9 et ses raccordements aux volumes supérieur 7 et inférieur 8, ont une forme complexe. Le canal qu'il forme, avec le volume inférieur 8, pour conduire l'air ayant traversé l'élément de filtration 13 est donc une source de perte de charge supplémentaire dans le circuit alimentant le deuxième dispositif d'entraînement d'air par la sortie inférieure 5. En comparaison, le circuit d'alimentation par la sortie supérieure 2 du premier dispositif d'entraînement d'air est beaucoup plus direct.

Ce boîtier comprend encore une arrivée d'air recyclé 14 entre l'élément de filtration 13 et la sortie inférieure 5. Sur l'exemple présenté, cette arrivée d'air recyclé est située à la jonction entre le volume inférieur 8 et le volume intermédiaire 9. Dans une variante de réalisation, elle peut se trouver soit un peu plus dans le volume inférieur 8 soit dans le volume intermédiaire 9. De manière avantageuse, cette arrivée 14 est configurée pour que l'air qui en provient puisse suivre un circuit le plus direct possible, c'est-à-dire en minimisant les pertes de charge, vers la sortie inférieure 5.

Le moyen de commande de la fermeture de cette arrivée d'air 14 est avantageusement constitué par un volet d'arrivée d'air recyclé 15, positionné contre une paroi intérieure du boîtier, en position fermée de ladite arrivée d'air recyclé 14. Il permet l'ouverture de l'arrivée d'air recyclé 14 en pivotant vers le haut autour d'un axe horizontal. Il est, de plus, configuré pour pouvoir, lors de l'ouverture de l'arrivée 14 d'air recyclé, se trouver dans une position 15a, telle que représentée sur la figure 2, qui ferme la communication entre le haut et le bas dans le volume 9 intermédiaire, en laissant ladite arrivée d'air recyclé 14 du côté de la sortie inférieure 5.

Ce boîtier est prévu pour fonctionner selon au moins trois modes :
- Un mode « air frais complet » : dans ce cas le volet de mixage 12 est mis dans une position fermant complètement l'arrivée 11 d'air recyclé et le volet d'arrivée d'air recyclé 15 ferme l'arrivée 14 d'air recyclé du bas et libère la communication entre le haut et le bas. Les deux volutes, 1 et 4, sont alors alimentées uniquement par l'air frais venant de l'arrivée 11. Pour atteindre la volute inférieure 4, l'air frais doit traverser le filtre 13 et le canal formé par le volume intermédiaire 9 et le volume inférieur 8.
- Un mode « air recyclé complet » : dans ce cas le volet de mixage 12 est mis dans une position fermant complètement l'arrivée 10 d'air frais et le volet d'arrivée d'air recyclé 15 est mis dans la position 15a fermant la communication entre le haut et le bas. La volute 1 est donc alimentée par l'air recyclé venant de l'arrivée 11 et traversant le filtre 13. La volute 4 inférieure est alimentée par l'air recyclé venant de l'arrivée 14. Cet air ne traverse pas de filtre dans le boîtier.

- Un mode « double nappe » : dans ce cas le volet de mixage 12 est mis dans une position fermant complètement l'arrivée 11 d'air recyclé et le volet d'arrivée d'air recyclé 15 est mis dans la position 15a fermant la communication entre le haut et le bas. La volute 1 est donc alimentée par l'air frais venant de l'arrivée 10 et traversant le filtre 13. La volute 4 inférieure est alimentée par l'air recyclé venant de l'arrivée 14. Cet air recyclé ne traverse pas de filtre dans le boîtier.

Il existe encore un troisième mode de fonctionnement, que l'on peut appeler « air frais mixé », dans lequel le volet d'arrivée d'air recyclé 15 ferme l'arrivée 14 d'air recyclé du bas, comme dans le mode « air frais complet ». Par contre, le volet de mixage 12 est mis dans une position intermédiaire, dans laquelle l'arrivée d'air frais 10 est en grande partie ouverte, mais où un pourcentage d'air recyclé peut passer par l'ouverture 11. Ce mélange d'air frais et d'air recyclé suit alors le même circuit vers les sorties supérieure 2 et inférieure 5, que l'air frais dans le mode « air frais complet ». Lorsque le mode de fonctionnement du système de chauffage ventilation et/ou climatisation autorise l'introduction d'un pourcentage d'air recyclé dans l'air frais, cela permet de gagner en énergie d'entraînement, car le circuit global de l'air recyclé, entre l'habitacle et le système, présente moins de contre-pression. Par contre, l'air recyclé venant de l'ouverture 11 doit traverser le moyen de filtration 13 pour atteindre les volutes supérieure 1 et inférieure 4. De plus, il suit un circuit complexe pour atteindre la volute inférieure 4. Ces pertes de charge, font perdre une partie de l'avantage que l'on a à utiliser de l'air recyclé, avec théoriquement une faible contre-pression.

Comme illustré aux figures 3 à 5, selon l'invention, le boîtier comprend un moyen 16, 17 destiné à fournir un flux d'air recyclé apte à s'ouvrir par différence de pression. Il est ici placé dans le bas du boîtier d'entrée d'air et permet à l'air recyclé de suivre un circuit avec de faibles pertes de charge pour alimenter les dispositifs d'entraînement d'air, en particulier le dispositif inférieur, lorsque l'arrivée d'air recyclé 14 près de la sortie inférieure 5 est fermée par le volet 15.

Plus précisément ledit moyen 16,17 fonctionnant par différence de pression comprend, par exemple, une ouverture 16, pratiquée dans le volet 15. A l'intérieur du boîtier, un volet complémentaire 17 est disposé, pivotant autour d'un axe horizontal lié au volet 15 devant cette ouverture 16. Il ferme cette ouverture 16 lorsqu'il est plaqué contre le volet 15 et la libère en pivotant vers le haut.

Dans un premier mode de réalisation, ce volet 17 est laissé libre en rotation. Il s'ouvre donc quand la pression à l'intérieur du boîtier est plus faible qu'à l'extérieur, typiquement lorsque l'un et/ou l'autre des dispositifs d'entraînement d'air fonctionne. Dans ce cas, c'est le poids du volet qui sert de force de rappel.

Dans une variante, le volet complémentaire peut être équipé d'un moyen de rappel élastique. La force de ce rappel peut être adaptée pour refermer l'ouverture 16 lorsque la différence de pression passe en dessous d'un seuil déterminé ou lorsque le boîtier n'est pas dans une position verticale.

Le boîtier selon l'invention offre une alternative au mode « air frais mixé » du boîtier des figures 1 et 2 pour fournir un mélange d'air frais et d'air recyclé, en particulier au circuit du système de chauffage ventilation et/ou climatisation alimenté par la volute inférieure 4.

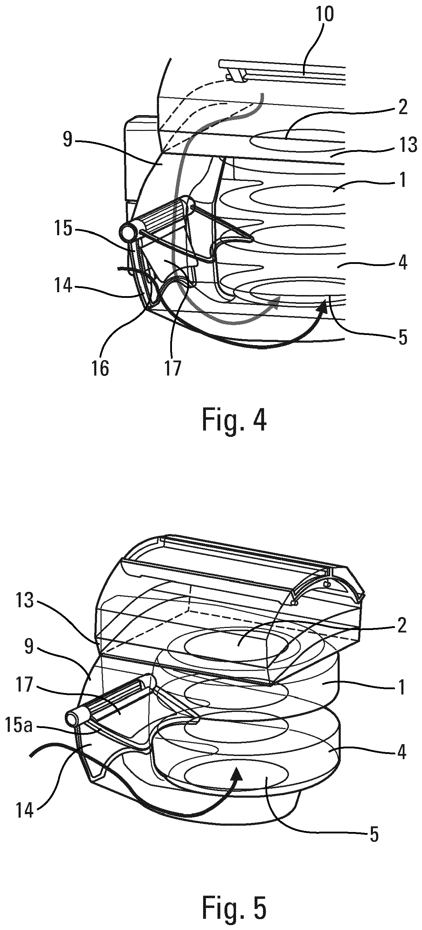

En effet, en référence à la figure 4, lorsque le boîtier selon l'invention est en mode de fonctionnement « air frais complet », tel qu'initialement défini, la différence de pression dans le bas du boîtier par rapport à l'habitacle fait que le volet 17 se soulève, laissant passer par l'ouverture 16 un flux d'air recyclé complémentaire. Compte tenu de la contre pression créée par le passage de l'air frais au travers du filtre 13 et du volume intermédiaire 9, le flux d'air recyclé complémentaire est dirigé vers la volute inférieure 4. Dans ce mode de fonctionnement, qui devient « air frais mixé amélioré », la volute supérieure 1 est alimentée pratiquement entièrement par l'air frais venant de l'arrivée 10 et traversant le filtre 13. La volute inférieure 4, quant à elle, est alimentée par de l'air frais venant de l'arrivée 10 en traversant le filtre 13, mélangé à un flux d'air recyclé venant directement de l'ouverture 16 au travers du volume inférieur 8.

L'air recyclé utilisé dans ce mode suit ainsi un circuit rencontrant le moins possible de contre-pression et l'on tire au maximum avantage de son utilisation pour réduire l'énergie nécessaire à l'entraînement d'air.

On notera à ce sujet que, comme on l'a évoqué plus haut, dans un mode de réalisation optimal l'arrivée d'air recyclé 14 est localisée pour minimiser les pertes de charge de l'écoulement qui en sort et va vers la sortie inférieure 5, l'ouverture 16 du dispositif selon l'invention bénéficie de cette optimisation. L'écoulement d'air recyclé passant par le dispositif lors du mode de fonctionnement « air frais mixé amélioré » et allant majoritairement vers la sortie inférieure 5 subit donc le moins de contre-pression possible avec le boîtier donné.

Les spécifications imposées par le système de chauffage ventilation et/ou climatisation peuvent nécessiter de fixer le pourcentage d'air recyclé en dessous d'une certaine valeur, par exemple 15%.

Pour cela, une première variante de l'invention limite l'écartement du volet complémentaire 17 en mettant des butées.

Une autre variante, qui pourra être combinée avec la première, joue sur la section de passage offerte à l'air recyclé au travers de l'ouverture 16. Par exemple, une grille 18 placée dans cette ouverture limite cette section de passage.

Il est à noter que le mode initial « air frais mixé » peut aussi être utilisé avec le boîtier selon l'invention. Dans ce cas, un peu d'air recyclé venant de l'arrivée d'air recyclé 11 dans le volume supérieur 7 alimente aussi la volute supérieure 1. Ce mode peut être utile si l'on veut alimenter les deux circuits du système de chauffage ventilation et/ou climatisation tout en conservant l'avantage de faibles contre-pression pour l'air recyclé alimentant la volute 4 inférieure.

Par ailleurs, une variante de réalisation où une commande empêche le volet additionnel 17 de s'ouvrir permet encore d'utiliser le boîtier en mode « air frais complet » si c'est nécessaire.

Il est à noter enfin que ce volet complémentaire 17 ne modifie pas les modes « air recyclé complet » ou « double nappe ». En effet, dans ce cas illustré sur la figure 5, le volet 15 étant dans sa position 15a bloquant la communication entre le volume du bas 8 et le volume de haut 7, la plus faible contre-pression dans le volume inférieur 8 fait que le volet complémentaire 17 reste plaqué par son poids contre le volet 15. Il n'y donc pas de communication entre le haut et le bas. Au besoin, en utilisant une variante de réalisation déjà évoquée, un moyen exerçant une force de rappel élastique au bon niveau est appliqué.

Dans un mode de réalisation particulier, où les modes de fonctionnement « air recyclé complet » et « double nappe » ne sont pas requis par le système de chauffage ventilation et/ou climatisation, le boîtier ne présente pas de volet 15 configuré pour alimenter la volute inférieure 4 et bloquer la communication entre les volumes supérieur 7 et inférieur 9. Dans ce cas, l'ouverture 16 d'arrivée de flux d'air recyclé complémentaire est pratiquée dans la paroi du boîtier, au niveau du volume inférieur 8 ou du volume intermédiaire 9, du côté de la volute inférieure 4 par rapport au filtre 13. Le volet complémentaire 17 est alors fixé à la paroi. L'invention est d'ailleurs également généralisable à un boîtier d'entrée d'air destiné à alimenter un seul dispositif d'entraînement d'air.

Le dispositif qui a été décrit est utilisable dans un boîtier de climatisation. Un tel boitier comprend en particulier le groupe moto-propulseur avec les roues d'entraînement, qui se logent dans les volutes 1, 4 et le moteur entraînant ces roues, qui peut être placé, pour l'exemple présenté, dans l'espace central au milieu des deux volutes. Il comprend également les moyens de commande des volets 12, 15 sélectionnant les flux d'air en fonction des modes de fonctionnement du système de climatisation.

## Revendications

1. Boîtier d'entrée d'air destiné à alimenter en air frais et en air recyclé un système de chauffage, ventilation et/ou climatisation, comprenant un circuit destiné à alimenter en air frais et/ou recyclé au moins un dispositif d'entrainement d'air, ledit boîtier comportant en outre un moyen destiné (16, 17) à fournir un flux d'air recyclé dans ledit circuit, ledit moyen (16, 17) étant apte à s'ouvrir par différence de pression, ledit circuit étant configuré de telle sorte qu'il s'y crée une perte de charge générant au moins temporairement ladite différence de pression, **caractérisé en ce que** ledit circuit comprend une partie commune (7) débouchant dans au moins une première partie (2) destinée à alimenter un premier dispositif d'entrainement d'air avec une première perte de charge et au moins une deuxième partie (9 ,8, 5) destinée à alimenter un deuxième dispositif d'entraînement d'air avec une deuxième perte de charge supérieure à ladite première perte de charge, ledit moyen destiné (16, 17) à fournir un flux d'air recyclé, étant situé dans ladite deuxième partie.

2. Boîtier d'entrée d'air selon la revendication précédente dans lequel un élément créant une perte de charge est interposé dans ledit circuit, ledit moyen (16, 17) destiné à fournir un flux d'air recyclé, apte à s'ouvrir par différence de pression, étant situé du côté du circuit destiné à alimenter ledit dispositif d'entraînement par rapport à l'élément de perte de charge.

3. Boîtier d'entrée d'air selon l'une des revendications précédentes comprenant un moyen de filtration (13) dans la partie commune (7) dudit circuit.

4. Boîtier d'entrée d'air selon l'une des revendications précédentes dans lequel ledit circuit comprend au moins une arrivée (10) destinée à l'air frais et/ou recyclé débouchant dans ladite partie commune (7), ladite partie commune (7) mettant en communication au moins une sortie (2) destinée à alimenter le premier dispositif d'entraînement d'air depuis ladite arrivée d'air (10), et au moins un canal (9, 8) mettant en communication ladite partie commune avec une deuxième sortie (5) destinée à alimenter ledit deuxième dispositif d'entraînement, ledit moyen destiné (16, 17) à fournir un flux d'air recyclé débouchant dans ledit canal (9,8).

5. Boîtier d'entrée d'air selon la revendication précédente dans lequel ledit circuit comprend en outre une arrivée (14) destinée à fournir de l'air recyclé équipée d'un moyen de fermeture (15) commandable, ladite arrivée (14) débouchant dans ledit canal (9, 8).

6. Boîtier d'entrée d'air selon la revendication précédente dans lequel ledit moyen de fermeture est un volet (15), dit principal.

7. Boîtier d'entrée d'air selon la revendication précédente, dans lequel le moyen (16, 17) destiné à fournir un flux d'air recyclé par différence de pression comprend une ouverture (16) pratiquée dans le volet principal (15).

8. Boîtier d'entrée d'air selon la revendication précédente, dans lequel, le moyen (16, 17) destiné à fournir un flux d'air recyclé par différence de pression comprend un volet additionnel (17) placé sur le volet principal (15) à l'intérieur du boîtier avec un moyen de rappel.

9. Boîtier d'entrée d'air selon la revendication précédente, dans lequel l'ouverture du volet additionnel (17) est limitée en amplitude par un moyen de butée.

10. Boîtier d'entrée d'air selon l'une quelconque des revendications 7 à 9, dans lequel la section de l'ouverture (16) pratiquée dans le volet principal (15) est partiellement bouchée par une grille (18).

11. Boîtier d'entrée d'air selon l'une quelconque des revendications 7 à 10, dans lequel le moyen de rappel du volet additionnel (17) est la gravitation.

12. Boîtier d'entrée d'air selon l'une quelconque des revendications 7 à 10, dans lequel le moyen de rappel du volet additionnel (17) est un moyen élastique.

13. Boîtier d'entrée d'air selon l'une quelconque des revendications 6 à 12, dans lequel le volet principal (15) de fermeture a une position (15a) fermant l'alimentation de la dite deuxième sortie (5) par ledit canal (9,8).

14. Boîtier de climatisation comprenant un boîtier d'entrée d'air selon l'une quelconque des revendications précédentes.

## Patentansprüche

1. Lufteinlassgehäuse zur Versorgung eines Heizungs-, Lüftungs- und/oder Klimatisierungssystems mit Frischluft und Umluft, umfassend einen Kreislauf, der dazu bestimmt ist, mindestens eine Luftmitnahmevorrichtung mit Frisch- und/oder Umluft zu versorgen, wobei das Gehäuse ferner ein Mittel umfasst, das dazu bestimmt ist (16, 17), einen Umluftstrom dem Kreislauf zuzuführen, wobei das Mittel (16, 17) geeignet ist, sich durch einen Druckunterschied zu öffnen, wobei der Kreislauf derart ausgelegt ist, dass dort ein Lastverlust auftritt, der zumindest zeitweise den Druckunterschied erzeugt, **dadurch gekennzeichnet, dass** der Kreislauf einen gemeinsamen Teil (7) umfasst, der in mindestens einen ersten Teil (2), der dazu bestimmt ist, eine erste Luftmitnahmevorrichtung mit einem ersten Lastverlust zu versorgen, und mindestens einen zweiten Teil (9, 8, 5), der dazu bestimmt ist, eine zweite Luftmitnahmevorrichtung mit einem zweiten Lastverlust, der höher als der erste Lastverlust ist, zu versorgen, mündet, wobei das Mittel, das dazu bestimmt ist (16, 17), einen Umluftstrom zuzuführen, im zweiten Teil gelegen ist.

2. Lufteinlassgehäuse nach dem vorhergehenden Anspruch, wobei ein Element, das einen Lastverlust erzeugt, in dem Kreislauf angeordnet ist, wobei das Mittel (16, 17), das dazu bestimmt ist, einen Umluftstrom zuzuführen, das geeignet ist, sich durch einen Druckunterschied zu öffnen, auf der Seite des Kreislaufs gelegen ist, der dazu bestimmt ist, die Luftmitnahmevorrichtung bezogen auf das Lastverlustelement zu versorgen.

3. Lufteinlassgehäuse nach einem der vorhergehenden Ansprüche, umfassend ein Filterungsmittel (13) im gemeinsamen Teil (7) des Kreislaufs.

4. Lufteinlassgehäuse nach einem der vorhergehenden Ansprüche, wobei der Kreislauf mindestens einen Eintritt (10) umfasst, der für die Frischluft und/oder Umluft bestimmt ist, der in den gemeinsamen Teil (7) mündet, wobei der gemeinsame Teil (7) mindestens einen Ausgang (2) verbindet, der dazu bestimmt ist, die erste Luftmitnahmevorrichtung von dem Lufteintritt (10) aus zu versorgen, und mindestens einen Kanal (9, 8), der den gemeinsamen Teil mit einem zweiten Ausgang (5) verbindet, der dazu bestimmt ist, die zweite Mitnahmevorrichtung zu versorgen, wobei das Mittel, das dazu bestimmt ist (16, 17), einen Umluftstrom zuzuführen, in den Kanal (9, 8) mündet.

5. Lufteinlassgehäuse nach dem vorhergehenden Anspruch, wobei der Kreislauf ferner einen Eintritt (14) umfasst, der dazu bestimmt ist, Umluft zuzuführen, der mit einem steuerbaren Schließmittel (15) versehen ist, wobei der Eintritt (14) in den Kanal (9, 8) mündet.

6. Lufteinlassgehäuse nach dem vorhergehenden Anspruch, wobei das Schließmittel eine Klappe (15) ist, die Hauptklappe genannt wird.

7. Lufteinlassgehäuse nach dem vorhergehenden Anspruch, wobei das Mittel (16, 17), das dazu bestimmt ist, einen Umluftstrom durch einen Druckunterschied zuzuführen, eine Öffnung (16) umfasst, die in der Hauptklappe (15) ausgebildet ist.

8. Lufteinlassgehäuse nach dem vorhergehenden Anspruch, wobei das Mittel (16, 17), das dazu bestimmt ist, einen Umluftstrom durch einen Druckunterschied zuzuführen, eine zusätzliche Klappe (17) umfasst, die auf der Hauptklappe (15) innerhalb des Gehäuses mit einem Rückstellmittel angeordnet ist.

9. Lufteinlassgehäuse nach dem vorhergehenden Anspruch, wobei die Öffnung der zusätzlichen Klappe (17) durch ein Anschlagmittel auslenkungsbegrenzt ist.

10. Lufteinlassgehäuse nach einem der Ansprüche 7 bis 9, wobei der Querschnitt der Öffnung (16), die in der Hauptklappe (15) ausgebildet ist, teilweise durch ein Gitter (18) verschlossen ist.

11. Lufteinlassgehäuse nach einem der Ansprüche 7 bis 10, wobei das Rückstellmittel der zusätzlichen Klappe (17) die Schwerkraft ist.

12. Lufteinlassgehäuse nach einem der Ansprüche 7 bis 10, wobei das Rückstellmittel der zusätzlichen Klappe (17) ein elastisches Mittel ist.

13. Lufteinlassgehäuse nach einem der Ansprüche 6 bis 12, wobei die Hauptschließklappe (15) eine Position (15a) aufweist, die die Versorgung des zweiten Ausgangs (5) durch den Kanal (9, 8) schließt.

14. Klimatisierungsgehäuse, umfassend ein Lufteinlassgehäuse nach einem der vorhergehenden Ansprüche.

## Claims

1. Air inlet casing intended to supply fresh air and recycled air to a heating, ventilation and/or air-conditioning system, comprising a circuit intended to supply fresh and/or recycled air to at least one air delivery device, said casing further comprising a means (16, 17) intended to provide a flow of recycled air to said circuit, said means (16, 17) being capable of opening as a result of a difference in pressure, said circuit being configured in such a way that a pressure drop generating said difference in pressure at least temporarily is created therein, **characterized in that** said circuit includes a common part (7) opening into at least one first part (2) intended to supply a first air delivery device with a first pressure drop, and at least one second part (9, 8, 5) intended to supply a second air delivery device with a second pressure drop greater than said first pressure drop, said means (16, 17) intended to provide a flow of recycled air being located in said second part.

2. Air inlet casing according to the preceding claim, in which an element creating a pressure drop is interposed in said circuit, said means (16, 17) intended to provide a flow of recycled air, capable of opening as a result of a difference in pressure, being located on the side of the circuit intended to supply said delivery device, with respect to the pressure drop element.

3. Air inlet casing according to either of the preceding claims, including a filtration means (13) in the common part (7) of said circuit.

4. Air inlet casing according to one of the preceding claims, in which said circuit includes at least one intake (10) intended for fresh and/or recycled air, said intake opening into said common part (7), said common part (7) providing communication between at least one outlet (2) intended to supply the first air delivery device from said air intake (10), and at least one duct (9, 8) providing communication between said common part and a second outlet (5) intended to supply said second delivery device, said means (16, 17) intended to provide a flow of recycled air opening into said duct (9, 8).

5. Air inlet casing according to the preceding claim, in which said circuit further includes an intake (14) intended to provide recycled air, equipped with a controllable closure means (15), said intake (14) opening into said duct (9, 8) .

6. Air inlet casing according to the preceding claim, in which said closure means is a flap (15), referred to as a main flap.

7. Air inlet casing according to the preceding claim, in which the means (16, 17) intended to provide a flow of recycled air as a result of a difference in pressure includes an opening (16) formed in the main flap (15).

8. Air inlet casing according to the preceding claim, in which the means (16, 17) intended to provide a flow of recycled air as a result of a difference in pressure includes an additional flap (17) placed on the main flap (15) inside the casing with a restoring means.

9. Air inlet casing according to the preceding claim, in which the opening of the additional flap (17) is limited in terms of range by a stop means.

10. Air inlet casing according to any one of Claims 7 to 9, in which the section of the opening (16) formed in the main flap (15) is partially blocked by a grate (18).

11. Air inlet casing according to any one of Claims 7 to 10, in which the means for restoring the additional flap (17) is gravitation.

12. Air inlet casing according to any one of Claims 7 to 10, in which the means for restoring the additional flap (17) is an elastic means.

13. Air inlet casing according to any one of Claims 6 to 12, in which the main flap (15) for closure has a position (15a) closing the supply to said second outlet (5) by said duct (9, 8).

14. Air-conditioning casing including an air inlet casing according to any one of the preceding claims.
